# EUROPEAN PATENT SPECIFICATION

(11) **EP 4 027 259 B1**
(45) Date of publication and mention of the grant of the patent: **06.08.2025**
(21) Application number: 20859934.0
(22) Date of filing: 02.06.2020
(51) Int. Cl.: G06Q 10/06, G06F 30/13, G06F 111/06, G06F 111/20, G06F 30/20

(54) **LAYOUT DESIGN DEVICE, LAYOUT DESIGN METHOD, AND PROGRAM**
VORRICHTUNG, VERFAHREN UND PROGRAMM ZUR LAYOUTGESTALTUNG
DISPOSITIF DE CONCEPTION D'AGENCEMENT, PROCÉDÉ DE CONCEPTION D'AGENCEMENT ET PROGRAMME

(30) Priority: 04.09.2019 JP 2019161426
(43) Date of publication of application: 13.07.2022
(73) Proprietor: Panasonic Intellectual Property Management Co., Ltd., Osaka-shi, Osaka 540-6207 (JP)
(72) Inventor: ICHIMURA, Daijiroh, Osaka 540-6207 (JP); SHIN, Hidehiko, Osaka 540-6207 (JP)
(74) Representative: Eisenführ Speiser
(86) International application number: PCT/JP2020/021781
(87) International publication number: WO 2021/044680

(56) References cited:
- WO-A1-2018/156737
- JP-A- 2002 215 698
- JP-A- 2010 122 866
- JP-A- 2010 191 526
- JP-A- 2011 198 252
- JP-A- 2012 113 620
- JP-A- H08 166 974
- US-A1- 2017 235 853

## Description

### TECHNICAL FIELD

The present disclosure relates to a layout design device, a layout design method, and a program for designing a layout in a certain space by using a flow line of a target in the space.

### BACKGROUND ART

US 2017/0235853 A1 discloses a method, a system, and a computer program product for simulating the layout and flow of a manufacturing facility. An initial facility layout concept and a baseline input data set are received which define placement and movement of virtual objects within a virtual facility model. At least one of several analyses is performed based on the initial facility layout concept and the baseline input data set. An event flow analysis that outputs timing for movement of the objects from the initial positions may be performed. A geometric flow analysis that outputs interactions between the objects resulting from the movements from the initial positions may be performed. An ergonomic analysis that outputs human postures and motions resulting from interactions with objects may be performed. A simulated flow model for the manufacturing facility is generated. A three-dimensional virtual environment of the simulated flow model is generated and output for display.

WO 2018/156737 A1 relates to an augmented virtual model of a commercial structure, such as a processing plant and/or a manufacturing plant which includes a virtual design, as built data and experiential measurement data. A User may view the augmented model in a virtual reality setting based with the content presented to the user based upon a location of the user at the time of viewing. Aspects of the Augmented Virtual Model are updated over time and utilized to track performance.

In recent years, flow line analysis has been used in various situations such as a factory and a store. For example, a flow line of a person such as a worker, a store clerk, or a customer is acquired, and is used for the purpose of improving a layout in order to improve work efficiency in a specific place. In the flow line analysis, for example, by using a flow line of a person or the like extracted from image data imaged by a camera, the extracted flow line is analyzed.

Patent Document 1 describes a technique of drawing a flow line for a specific part of a person by using information indicating a position of each of a plurality of parts including the specific part. In addition, Patent Document 2 describes a technique of analyzing flow line data by combining a work log including work information and the flow line data.

### PRIOR ART DOCUMENTS

### PATENT DOCUMENTS

Patent Document 1: International Patent Publication No. 2016/098265
Patent Document 2: Japanese Patent No. 5915731

### SUMMARY OF INVENTION

### PROBLEMS TO BE SOLVED

The present disclosure provides a layout design device, a layout design method, and a program capable of designing a layout that improves work efficiency in a specific location.

### MEANS FOR SOLVING PROBLEM

A layout design device of the present disclosure can be a layout design device that designs a new layout obtained by changing an existing layout related to arrangement of a facility in a certain space, the layout design device comprising: a generation unit that generates a new layout according to stay data related to a stay specified from flow line data representing a motion of a target in a case of the existing layout in the space; and an output processing unit that outputs the new layout generated by the generation unit, in which the generation unit generates the stay data by extracting a stay portion where the target such as a worker stays from the flow line data, and generates the new layout by using auxiliary information that associates the facility arranged in the space, the stay portion, and the facility arranged in the space, and the stay data.

These general and specific aspects may be implemented by a system, a method, and a computer program, and a combination thereof.

### EFFECTS OF INVENTION

According to the layout design device, the layout design method, and the program of the present disclosure, it is possible to provide a layout that improves work efficiency in a specific location.

### BRIEF DESCRIPTION OF DRAWINGS

[FIG.1A] FIG. 1A is a conceptual diagram illustrating a layout design device of the present disclosure. [FIG.1B] FIG. 1B is a block diagram showing a configuration of the layout design device of the present disclosure.
[FIG.2] FIG. 2 is a data configuration diagram of layout data used in the layout design device of FIG. 1B.
[FIG.3] FIG. 3 is a layout of a space to be designed by the layout design device of FIG. 1B.
[FIG.4] FIG. 4 is an example of constraint condition data used in the layout design device of FIG. 1B.
[FIG.5] FIG. 5 is an example of flow line data used in the layout design device of FIG. 1B.
[FIG.6] FIG. 6 is an example in which flow lines are added to the layout of FIG. 3.
[FIG.7] FIG. 7 is a block diagram illustrating details of a control unit of the layout design device of FIG. 1B.
[FIG.8A] FIG. 8A is an example of movement frequency data indicating the number of times of movement between facilities.
[FIG.8B] FIG. 8B is an example of related data.
[FIG.9A] FIG. 9A is a flowchart illustrating processing executed by the layout design device of a first embodiment.
[FIG.9B] FIG. 9B is a flowchart illustrating an example of layout design processing in the flowchart of FIG. 9A.
[FIG.10A] FIG. 10A is an example of a layout and flow lines in a first space.
[FIG.10B] FIG. 10B is an example of a new layout created from the layout of FIG. 10A.
[FIG.10C] FIG. 10C is an example in which auxiliary lines are added to the layout of FIG. 10A.
[FIG.10D] FIG. 10D is an example of a new layout created from the layout of FIG. 10C.
[FIG.11] FIG. 11 is a flowchart illustrating an example of layout design processing of a second embodiment.
[FIG.12] FIG. 12 is an example of a new layout created from the layout of FIG. 10C.
[FIG.13A] FIG. 13A is an example of a layout and flow lines in a second space.
[FIG.13B] FIG. 13B is an example in which an auxiliary line is added to the layout of FIG. 13A.
[FIG.13C] FIG. 13C is an example of a new layout created from the layout of FIG. 13B.

### DETAILED DESCRIPTION

### [Embodiments]

Hereinafter, embodiments of the present disclosure will be described with reference to the drawings. However, in the detailed description, unnecessary parts in the description of the conventional technique and substantially the same configuration may be omitted. This is to simplify the description. In addition, the following description and the accompanying drawings are disclosed so that those skilled in the art can fully understand the present disclosure, and are not intended to limit the subject matter of the claims.

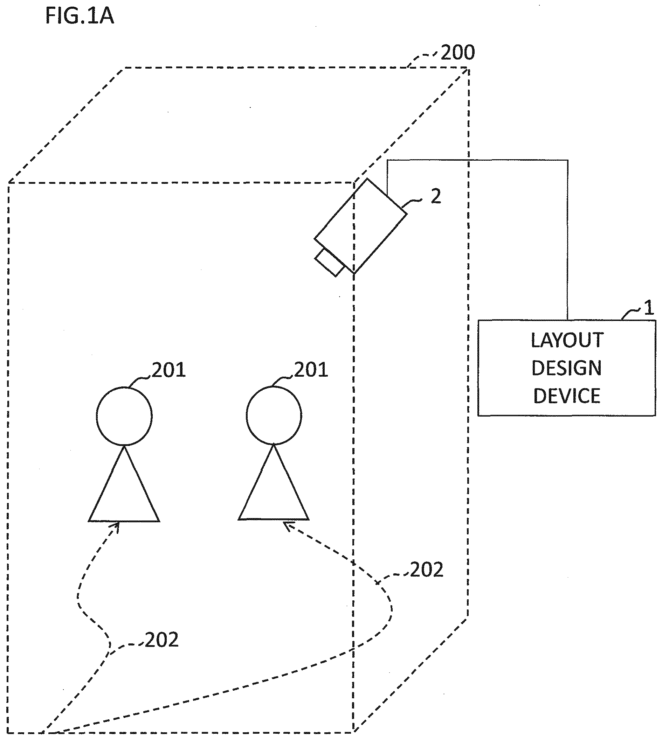

As illustrated in FIG. 1A, a layout design device 1 according to the present disclosure combines an existing layout of a certain space 200, flow lines 202 of a target 201 acquired in the layout, and auxiliary information acquired for these flow lines 202 of the target 201 to create a new layout of the space 200. For example, the flow line 202 of the target 201 can be specified by using an image captured by a camera 2. As will be described in detail later, the auxiliary information is information input by a user or the like, and is information that can be used to generate a layout but is not included in flow line information.

In the following description, it is assumed that the layout design device 1 creates a new layout for the purpose of improving work efficiency in a space having a plurality of facilities used by a worker for work. The new layout is, for example, a layout in which a position of the facility is changed or the number of facilities is increased or decreased as compared with the existing layout.

In the present description, a "flow line" means a line representing a route along which a "target" moves in a space. The "target" is, for example, a person such as a worker who works in the space or a robot. Further, for example, the "target" is a cart or a forklift moved by the worker for work. In addition, a flow line of a "product" or the like moved by the "worker" or the "cart" may be extracted as the "target" in addition to the "worker", the "cart", or the like.

A "layout" means arrangement of a facility in the space. The "facility" is, for example, an object installed in a space such as a shelf, a work table, or a machine tool. At the time of work, the worker moves between these facilities and uses necessary facilities. In addition, the "layout" may include arrangement of an "area" that is a range in which a worker who uses the facility can exist, in addition to the arrangement of the facility in the space. For example, when the facility is a work table, the worker does not exist on the work table but exists in a range in which the worker can reach the work table. Therefore, the "layout" may include such an area that is a range in which a worker stays for work together with an object.

### <First embodiment>

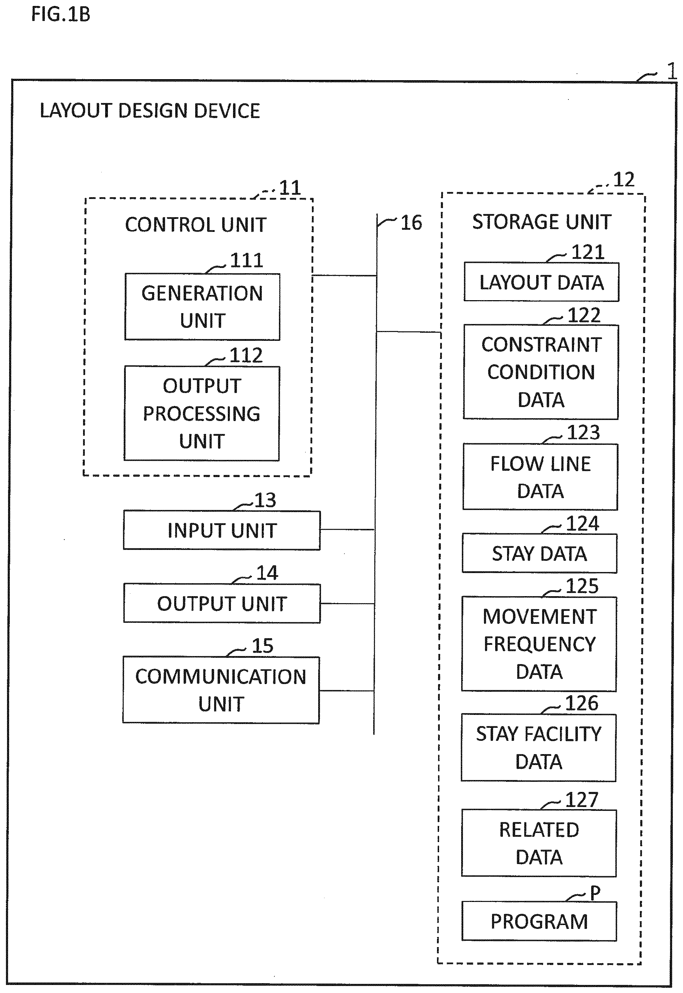

A layout design device according to a first embodiment will be described below with reference to FIGS. 1B to 10D.

### <<1-1. Configuration>>

As illustrated in FIG. 1B, the layout design device 1 is an information processing device including, for example, a control unit 11, a storage unit 12, an input unit 13, an output unit 14, and a communication unit 15, which are connected by a bus 16.

The control unit 11 is a controller that controls the entire layout design device 1. For example, the control unit 11 implements processing as a generation unit 111 and an output processing unit 112 by reading and executing a program P stored in the storage unit 12. Further, the control unit 11 is not limited to one that implements a predetermined function by cooperation of hardware and software, and may be a hardware circuit designed exclusively for implementing a predetermined function. That is, the control unit 11 can be implemented by various processors such as a CPU, an MPU, a GPU, an FPGA, a DSP, and an ASIC.

The storage unit 12 is a storage medium that stores various types of information. The storage unit 12 is implemented by, for example, a RAM, a ROM, a flash memory, a solid state drive (SSD), a hard disk, another storage device, or an appropriate combination thereof. In addition to the program P executed by the control unit 11, the storage unit 12 stores information to be used for creating a layout, various information acquired or generated for creating a layout, and the like. For example, the storage unit 12 stores layout data 121, constraint condition data 122, flow line data 123, stay data 124, movement frequency data 125, stay facility data 126, and related data 127.

The input unit 13 is input means such as an operation button, a keyboard, a mouse, a touch panel, and a microphone used for operation and data input. The output unit 14 is output means such as a display or a speaker used for outputting a processing result or data. The communication unit 15 is an interface circuit (module) for enabling data communication with an external device (not illustrated). For example, in the layout design device 1, flow line data is acquired via the communication unit 15, auxiliary information is acquired via the mouse which is the input unit 13, and the control unit 11 analyzes the acquired flow line data, designs a new layout, and outputs the obtained new layout to the display which is the output unit 14.

Here, the layout design device 1 may be implemented by one computer, or may be implemented by a combination of a plurality of computers connected via a network. In addition, for example, all or part of the data stored in the storage unit 12 may be stored in an external storage medium connected via a network, and the layout design device 1 may be configured to use the data stored in the external storage medium. Specifically, the layout data 121, the constraint condition data 122, or the flow line data 123 may be stored in the external storage medium.

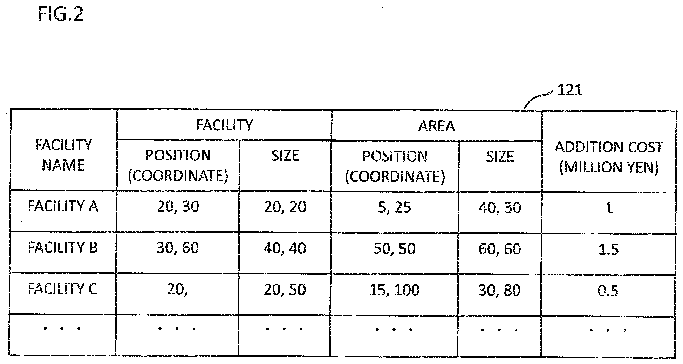

FIG. 2 illustrates an example of the layout data 121 related to an existing layout of a space in which a layout is designed. For example, the layout design device 1 stores the layout data 121 input by a user via the input unit 13 in the storage unit 12. In addition, the layout design device 1 designs a new layout on the basis of information of the existing layout defined by this layout data 121. In the layout data 121 illustrated in FIG. 2, a "position" at which a facility is arranged, a "size" of the facility, a "position" of an area that is a range in which a worker or the like who uses the facility can exist, a "size" of the area, and an "addition cost" that is a cost required in a case of adding a facility are associated with a "facility name" that is identification information of each facility. In the example illustrated in FIG. 2, each "position" is specified using, for example, "coordinates".

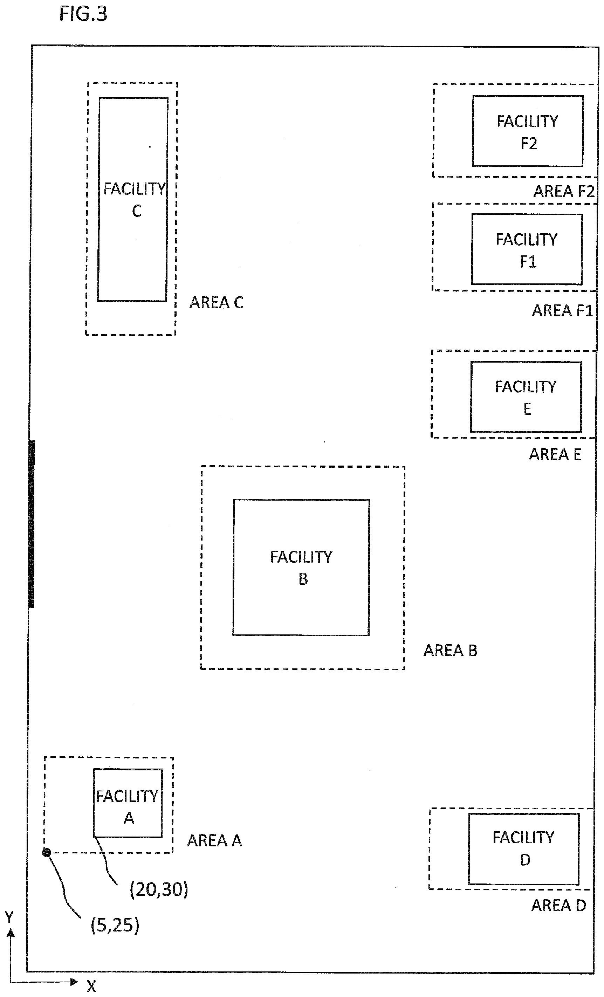

In the example of FIG. 2, a "facility A" is installed at a position specified by XY coordinates (20, 30) in the space in which the layout is changed. Further, a size of the "facility A" is (20, 20). FIG. 3 is an example of a layout of a space corresponding to the layout data 121 illustrated in FIG. 2. Specifically, the "facility A" has a size of 20 in an x direction and a size of 20 in a y direction, and is installed with reference to coordinates (20, 30) as illustrated in FIG. 3. Specifically, the facility A is a 20 × 20 quadrangle, and a point having the smallest coordinate value among four points forming the quadrangle is the coordinates (20, 30). Here, for example, it is assumed that "coordinate 10" and "size 10 " correspond to a predetermined length (for example, 2 m). Furthermore, as illustrated in FIG. 3, in an "area" set as a work range for the facility A, a position specified by XY coordinates (5, 25) is designated. Further, a size of an area A set for the facility A is (40, 30). Specifically, the area of the facility A has a size of 40 in the x direction and a size of 30 in the y direction. Then, an addition cost of the "facility A" is one million yen.

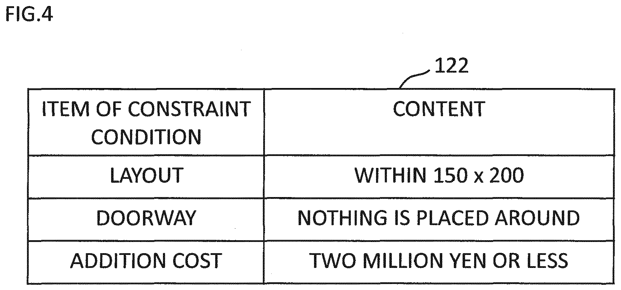

FIG. 4 illustrates an example of the constraint condition data 122 which is a condition when a layout is designed. For example, in the layout design device 1, a user inputs this constraint condition data 122 via the input unit 13. The layout design device 1 designs a new layout within a range of conditions designated by this constraint condition data 122. In the constraint condition data 122 illustrated in FIG. 4, an "item of constraint condition" that is a category of the constraint condition is associated with specific "contents" of the condition.

In the example of FIG. 4, an item "layout" is designated as "within 150 × 200". Specifically, it is defined that a size of a space in which the new layout is designed is within 150 in the x direction and within 200 in the y direction. As described above, the size of the space can be limited as the constraint condition. Note that the size used in FIG. 4 is the same standard as the size illustrated in FIG. 2.

In FIG. 4, an item "doorway" is designated as "nothing is placed around". Specifically, it is defined that the new layout is designed so that an object such as a facility is not installed around the doorway. As described above, a range in which the facility can be arranged or a range in which it cannot be arranged can be limited as the constraint condition.

Furthermore, in FIG. 4, an item "addition cost" is designated as "two million yen or less". Specifically, it is defined that the new layout is designed with an addition cost of two million yen or less. As described above, "information regarding allowance of the addition number of facilities" can be limited as the constraint condition. Note that the constraint condition data 122 illustrated in FIG. 4 is an example, and the present invention is not limited thereto. For example, in a case where intersection of flow lines of a plurality of different targets is restricted, an efficient layout with less intersection can be designed.

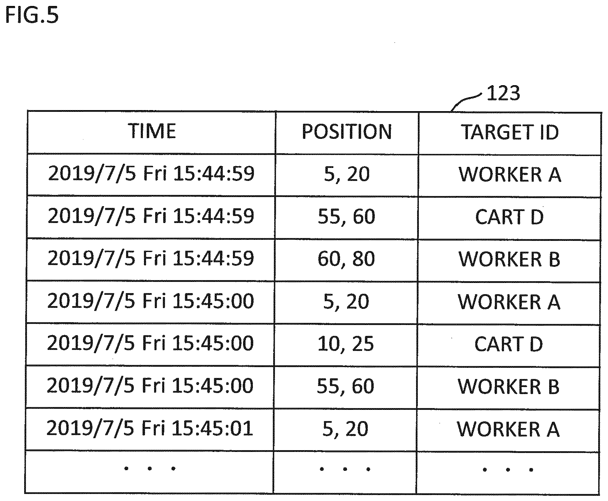

FIG. 5 illustrates an example of the flow line data 123. The layout design device 1 may extract a motion of a target such as a worker by using moving image data and create the flow line data 123 therein, or may acquire the flow line data 123 created by an external device. In the flow line data 123 shown in FIG. 5, "time" at which a frame of moving image data is acquired, a "position" of a target in this frame, and a "target ID" assigned to the target are associated with each other. The "position" of the flow line data 123 in FIG. 5 is by "coordinates" similarly to the "position" of the layout data 121 in FIG. 2, but is not limited to the coordinates as long as the position can be specified.

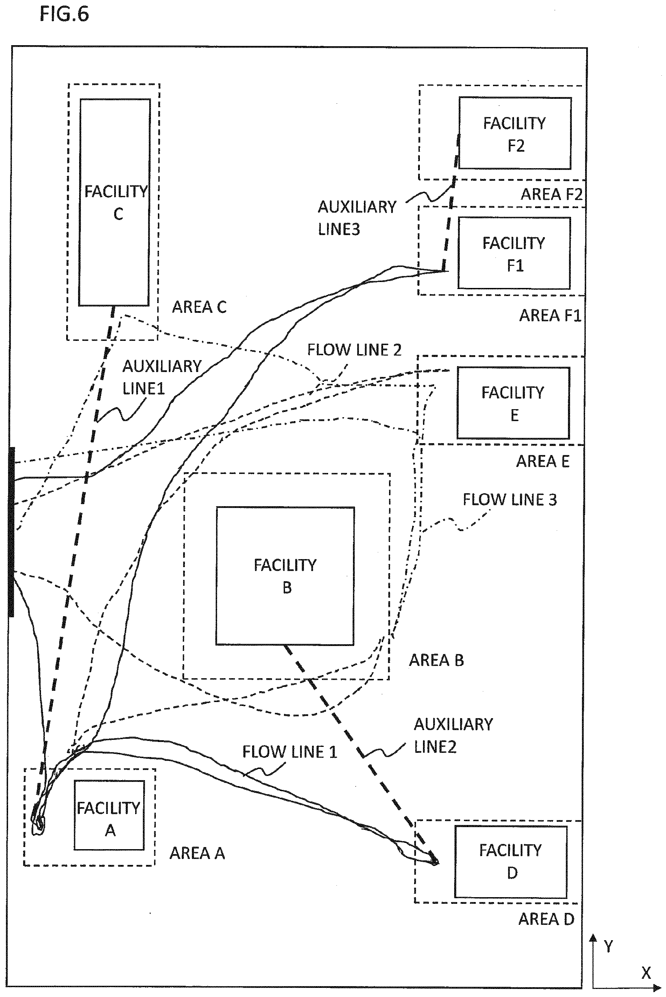

For example, the flow line data 123 in FIG. 5 is data generated by extracting flow lines of targets as shown in FIG. 6 at predetermined time intervals (in the example of FIG. 5, every 0.01 seconds). In the example of FIG. 5, it can be seen that a target to which a target ID "worker A" is assigned is present at coordinates (5, 20) at "15 : 44 : 59 on July 5, 2019". In addition, it can be seen that the "worker A" is also present at the coordinates (5, 20) at "15 : 45 : 00" and "15 : 45 : 01" on the same day.

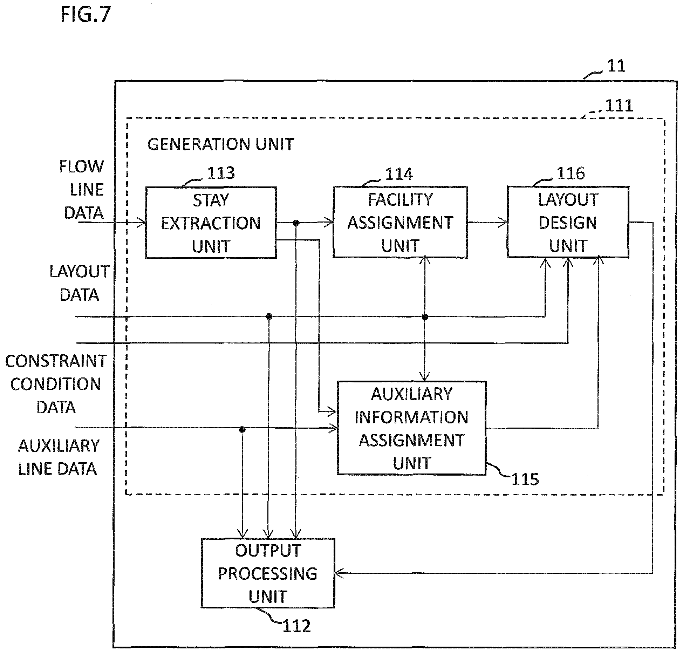

FIG. 7 is a block diagram illustrating the inside of the control unit 11. The generation unit 111 executes processing as a stay extraction unit 113, a facility assignment unit 114, an auxiliary information assignment unit 115, and a layout design unit 116.

The stay extraction unit 113 acquires, from the storage unit 12, the flow line data 123 representing motions of targets in a case of an existing layout in a certain space, and extracts, as a stay point, a stay portion that is a range in which each target stays within a predetermined range for a predetermined time or more (for example, five seconds or more within a radius of 50 cm). It is sufficient that the target is present in the predetermined range for the predetermined time or more, and is not necessarily stopped at one point. In addition, the stay extraction unit 113 sets a time during which each target stays at the stay point as a stay time. Then, the stay extraction unit 113 sets data in which the extracted stay point and the stay time are associated with each other as stay data and outputs the data to the facility assignment unit 114 and the output processing unit 112. Specifically, the stay data is data including coordinates of a range where a stay has occurred and a time when the stay has occurred.

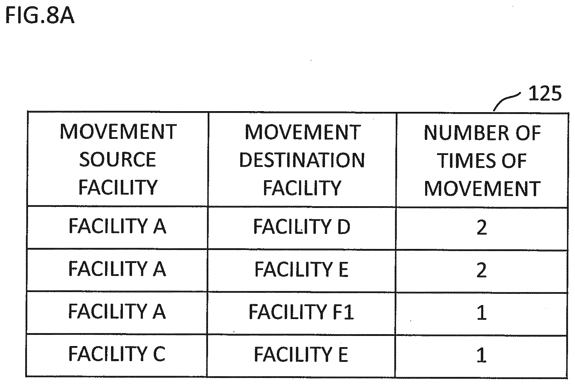

The facility assignment unit 114 acquires the layout data 121 from the storage unit 12, and further inputs stay data from the stay extraction unit 113. In a case where a stay point included in the stay data is in an area of a facility specified by the layout data 121, the stay and the facility are associated. Specifically, the facility assignment unit 114 associates a stay time with the facility. As a result, it is possible to specify which facility is the cause of the stay. At the same time, the facility assignment unit 114 specifies movement between two facilities from a movement source facility to a movement destination facility from information before and after a time for staying in the facility. Then, the facility assignment unit 114 similarly counts movement between two facilities in a plurality of flow lines, and generates the movement frequency data 125 as illustrated in FIG. 8A. FIG. 8A is the movement frequency data 125 that associates a movement source facility, a movement destination facility, and the number of times of movement between the two facilities. In addition, the facility assignment unit 114 calculates the stay time as a working time which is a time for working in the facility. Then, the facility assignment unit 114 sets data including a working time and the number of times of stay for each facility as stay facility data. In addition, since the generation unit 111 generates a new layout on the basis of the movement frequency data 125 with emphasis on between two facilities having a larger number of times of movement than between facilities having a smaller number of times of movement, it is possible to generate a more practical layout. In a case where it is difficult to acquire a plurality of flow lines, a movement between facilities may be considered with one representative flow line without counting movement frequency data. Note that for simplification of description herein, "working time = stay time" is set. However, calculation such as "working time = 0.9 × stay time" and "working time = stay time - 30 seconds × number of times of arrival" may be performed depending on contents of the facility and the work. Note that the "number of times of arrival" is the number of times a target has arrived at a corresponding stay point.

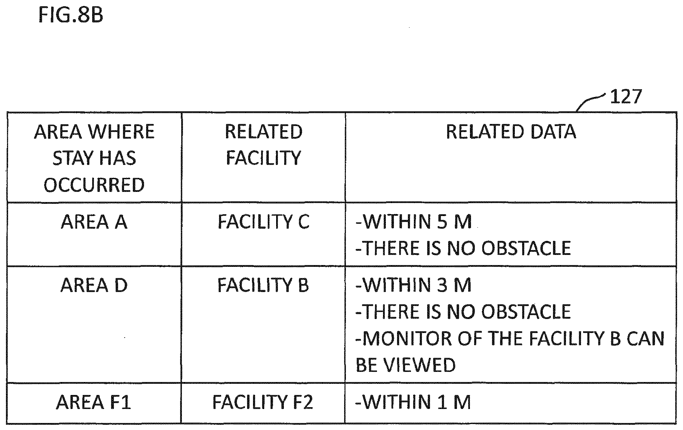

The auxiliary information assignment unit 115 acquires the layout data 121 from the storage unit 12, acquires the stay data 124 from the stay extraction unit 113, and acquires auxiliary information via the input unit 13. The "auxiliary information" is information for associating a "stay of target" with a "facility". Here, an example of a case where the auxiliary information is auxiliary line data for specifying an "auxiliary line" connecting a stay point designated by a user via the input unit 13 and a facility on an image representing a layout and a flow line of a space displayed on the output unit 14 will be described. For example, the auxiliary line data includes "coordinates of a start point" and "coordinates of an end point" of the auxiliary line. In addition, as illustrated in FIG. 6, the user connects a stay point and a facility desired to be associated with an auxiliary line. Therefore, the start point and the end point of the auxiliary line indicate the facility or the stay point. Accordingly, the auxiliary information assignment unit 115 generates, as the related data 127, data in which the stay point specified by the coordinates of the start point or the end point of the auxiliary line data acquired via the input unit 13 is associated with the facility specified by the coordinates of the start point or the end point. In this manner, the auxiliary information assignment unit 115 specifies the facility specifying the coordinates designated by the auxiliary information from the layout data 121, and generates the related data 127 associated with the stay point as illustrated in FIG. 8B. In FIG. 8B, the stay point is indicated by an area to which the stay point belongs. Further, the auxiliary information assignment unit 115 outputs the related data 127 to the layout design unit 116.

FIG. 8B will be described. FIG. 8B exemplifies the layout and flow lines illustrated in FIG. 6, and illustrates an area where a stay has occurred, a related facility related to an area other than the area including the stay, and constraint conditions of the area and the related facility. For example, in the area A, in order for a worker to see an end notification lamp of a facility C, it is assumed as the related data 127 that a distance between the area A and the facility C is within 5 m and there is no obstacle between the area A and the facility C. In an area D, in order to work on a facility D in the area D while viewing a monitor of a facility B, it is assumed as the related data 127 that a distance between the area D and the facility B is within 3 m, there is no obstacle between the area D and the facility B, and the monitor of the facility B can be viewed. In an area F1, in order to place a work-in-process created in a facility F1 on a shelf in an area F2, it is assumed as the related data 127 that a distance between the area F1 and the facility F2 is within 1 m.

The output processing unit 112 inputs the stay data, the layout data, and the auxiliary line data from the storage unit 12, and draws and causes the display which is the output unit 14 to display them. For example, as illustrated in FIG. 6, the output processing unit 112 draws a layout by the layout data, draws flow lines on the layout by the flow line data and the stay data, and displays them on the output unit 14. Further, when acquiring the auxiliary line data as the auxiliary information in the layout and the flow lines displayed in this manner, the output processing unit 112 additionally draws auxiliary lines.

After acquiring the layout data 121, the constraint condition data 122, the movement frequency data 125, the stay facility data 126, and the related data, the layout design unit 116 designs a new layout on the basis of evaluation functions. Examples of the evaluation functions used by the layout design unit 116 will be described.

### (1) Evaluation function 1 (total moving distance)

An evaluation function in which a reduction amount of a moving distance when a total moving distance of a target is changed from an existing layout to a new layout is set as an evaluation value will be described. In a case of using this evaluation function, the layout design unit 116 sets a layout having a larger reduction amount, which is an evaluation value, than the existing layout as the new layout. Thereafter, the layout design unit 116 uses the layout data 121 and the constraint condition data 122 to design a layout in which positions of a plurality of facilities arbitrarily selected in a space are interchanged. Note that examples of a method of calculating the "total moving distance" include (1) a method of calculating a distance by connecting the centers of the facility A and the facility B with a straight line, (2) a method of obtaining a distance traveled only by vertically and horizontally moving from the facility A to the facility B, a so-called "Manhattan distance", and (3) a method of calculating a distance traveled while detouring around from the facility A to the facility B without stepping on other facilities.

Then, the layout design unit 116 obtains, as an evaluation value, a total moving distance from a moving distance of each target, specifically, the number of times of movement between facilities and a distance between the two facilities. Further, in a case where a reduction amount of the total moving distance, which is the evaluation value, satisfies a predetermined condition, the layout design unit 116 determines this layout as a new layout.

Here, the number of facilities whose positions are interchanged is not limited. Therefore, the positions of two facilities may be interchanged, or the positions of two or more facilities may be randomly interchanged. A layout design by a genetic algorithm (see, for example, "A Genetic Algorithm for the Floorplan Design Problem with Search Area Adaptation along with Searching Stage" (Hiroshi Someya et al., Journal of the Institute of Electrical Engineers of Japan, Vol. 119, No. 3, pp. 393-403, 1999)) may be used. In general, the method of calculating the evaluation value is set such that the better the layout, the larger the value of the evaluation value. A case where the evaluation value satisfies the predetermined condition may be a case where the evaluation value exceeds a predetermined threshold, or may be a case where the evaluation values of a plurality of patterns of layouts are compared and a layout having a maximum evaluation value among them is selected.

Here, in a case where a constraint condition is set for the auxiliary line, the layout design unit 116 can give a penalty value at the time of calculating the evaluation value for a layout that does not satisfy this constraint condition. As a result, it is possible to preferentially select a layout that satisfies the constraint condition. For example, this constraint condition sets that an "angle for a target worker to view the monitor is within 60°" as the "auxiliary line indicating that the worker views the monitor in the adjacent area". In a case where the auxiliary line is set, the penalty value is not given in a case where the "angle is within 60°", but the penalty value corresponding to the angle is given in a case where the "angle is not within 60°". In addition, if it is preferable that length of the auxiliary line is small, a reduction amount of the sum of the length of the auxiliary line to the total moving distance of the existing layout and the sum of the length of the auxiliary line to the total moving distance of the new layout may be used as the evaluation value. At this time, instead of simply adding the length of the auxiliary line, the evaluation value may be obtained by adding the length of the auxiliary line to the total moving distance by weighted addition.

### (2) Evaluation function 2 (operation rate)

An evaluation function using an operation rate of a facility as an evaluation value will be described. In a case where this evaluation function is used, the layout design unit 116 sets a layout having a higher operation rate, which is an evaluation value, than the existing layout as the new layout. First, the layout design unit 116 uses the layout data 121 to design a layout in which positions of a plurality of facilities arbitrarily selected in a space are interchanged. In addition, the layout design unit 116 obtains an operation rate of each facility in the designed layout by using the stay facility data and the related data. Furthermore, the layout design unit 116 obtains an average value of the operation rates of all the facilities as an evaluation value, and determines this layout as a new layout in a case where this evaluation value satisfies a predetermined condition. Also here, the number of facilities whose positions are interchanged is not limited. For example, the operation rate of each facility is calculated using the following Formula (1). The case where the evaluation value satisfies the predetermined condition may be a case where the evaluation value exceeds a predetermined threshold, or may be a case where evaluation values of a plurality of patterns of layouts are compared and a layout having a maximum evaluation value among them is selected. Operation rate = stay time in area of facility ÷ total time

In the Formula (1), the "stay time in area of facility" corresponds to a stay time of each facility included in the stay facility data. Further, "total time" is obtained by adding a total moving time to the stay time in the area of the facility.

Here, in a case where there is a stay connected by an auxiliary line outside an area set for a facility, the layout design unit 116 also handles the stay connected by the auxiliary line outside the area set for the facility as stay of the facility in calculation of the operation rate. For example, it is assumed that the facility B associated with a stay in the area A by an auxiliary line exists, and the stay has occurred in the area A, but the stay has not occurred in the area B of the facility B. In such a case, since the facility B is associated with the facility A by the auxiliary line, the layout design unit 116 calculates an operation rate with a stay time in the area A as a stay time in the area B.

### (3) Evaluation function 3 (dispersion)

An evaluation function that uses a degree of dispersion of positions of a plurality of targets as an evaluation value will be described. In a case where this evaluation function is used, the layout design unit 116 sets a layout having a higher degree of dispersion as a new layout. First, the layout design unit 116 uses the layout data 121 to design a layout in which positions of facilities arbitrarily selected in a space are interchanged. In addition, the layout design unit 116 obtains an evaluation value representing a degree of dispersion for the designed layout by using stay facility data. For example, in a case where a plurality of targets do not simultaneously exist within a predetermined range or a predetermined area for a predetermined time or more (for example, five seconds or more), the layout design unit 116 can add the total time to obtain the evaluation value. Then, in a case where this evaluation value satisfies a predetermined condition, the layout design unit 116 determines this layout as a new layout. Also here, the number of facilities whose positions are interchanged is not limited. The case where the evaluation value satisfies the predetermined condition may be a case where the evaluation value exceeds a predetermined threshold, or may be a case where evaluation values of a plurality of patterns of layouts are compared and a layout having a maximum evaluation value among them is selected.

Note that, when designing a layout with the evaluation function as described above in these (1) to (3), the layout design unit 116 can design the layout within a range of the constraint condition defined in advance in the constraint condition data 122 as described above with reference to FIG. 4. For example, in a case where constraint conditions such as "a distance between the associated stay and facility is within a predetermined distance" and "the distance between the associated stay and facility is within predetermined accuracy" are defined, design is performed according to these conditions.

One evaluation function may be used for layout design by the layout design unit 116, or a plurality of evaluation functions may be combined. For example, the following Formula (2) can be used for the combination of the plurality of evaluation functions. Evaluation value = evaluation value 1 + evaluation value 2 + evaluation value 3

Specifically, the layout design unit 116 can set, as the evaluation value, a value obtained by summing the evaluation value 1 obtained by the evaluation function 1, the evaluation value 2 obtained by the evaluation function 2, and the evaluation value 3 obtained by the evaluation function 3 for one layout. At this time, each evaluation value 1 to 3 may be weighted by a different weight value.

Further, these evaluation functions are not limited to the above-described methods, and can be freely changed according to a facility, a space, or the like designed by the user.

### <<1-2. Operation>>

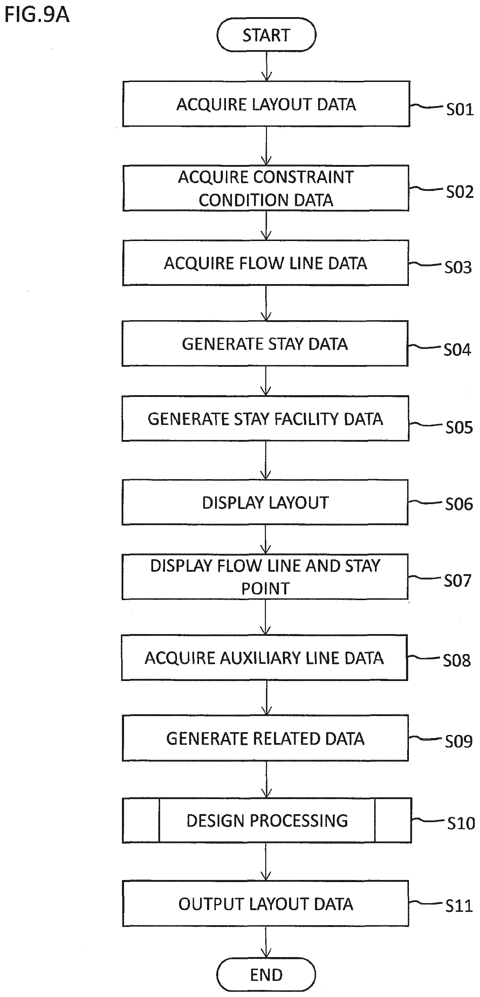

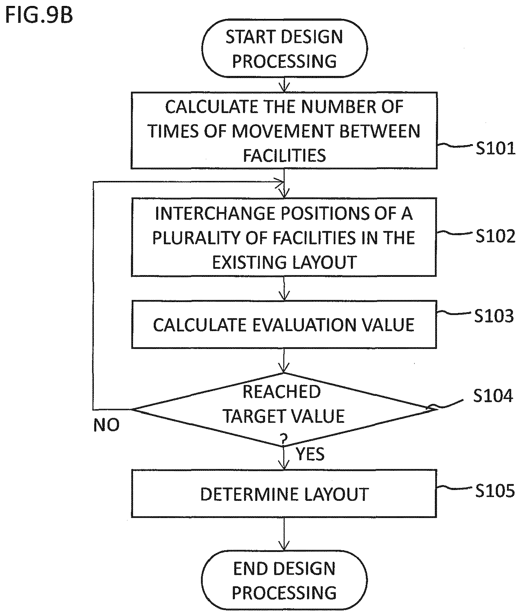

A flow of layout design processing executed by the layout design device 1 will be described with reference to flowcharts illustrated in FIGS. 9A and 9B.

The generation unit 111 acquires layout data 121 related to an existing layout before change (S01). In addition, the generation unit 111 acquires constraint condition data 122 that defines a constraint condition when designing a layout (S02). Furthermore, the generation unit 111 acquires flow line data 123 indicating a flow line of a target obtained in a space of the existing layout (S03). Note that order of the processing in steps S01 to S03 is not limited.

The generation unit 111 extracts a stay by using the flow line data 123 acquired in step S03, and generates stay data 124 and movement frequency data 125 for specifying a position and a time of the stay (S04).

The generation unit 111 uses the layout data 121 acquired in step S01 and the stay data 124 generated in step S04 to generate stay facility data 126 for specifying a facility in which the stay has occurred (S05).

The output processing unit 112 draws a layout of a space by using the layout data 121 acquired in step S01 and causes the output unit 14 to display the layout (S06). In addition, using the flow line data 123 acquired in step S03, the output processing unit 112 draws a flow line to be superimposed on the layout drawn in step S06, and causes the output unit 14 to display the flow line (S07). At this time, the output processing unit 112 may also highlight a stay point specified by the stay data 124. For example, the output processing unit 112 can perform display by increasing a diameter of a circle representing the stay point or darkening color of the circle according to a stay time by the stay point.

In the generation unit 111, auxiliary line data, which is auxiliary information, is acquired through the input unit 13 by a user with respect to the layout and the flow line displayed in steps S06 and S07 (S08). The generation unit 111 associates the stay point with the facility by using the layout data 121 acquired in step S01 and the auxiliary line data acquired in step S08, and generates related data (S09). A timing of the processing in steps S06 and S07 is not limited as long as the auxiliary information is acquired after the data necessary for the drawing is acquired.

The generation unit 111 generates related data 127 in which the facility and the stay are associated with each other by using the layout data 121 acquired in step S01 and the auxiliary line data acquired in step S08 (S09).

The generation unit 111 performs design processing for generating a layout by using the layout data 121, the constraint condition data 122, the flow line data 123, the stay facility data 126, and the related data 127 (S10).

The design processing in step S10 will be described with reference to the flowchart illustrated in FIG. 9B.

First, the generation unit 111 calculates the number of times of movement between facilities by using the layout data 121 and the flow line data 123 (S101).

The generation unit 111 generates layout data in which positions of a plurality of arbitrarily selected facilities are interchanged with the existing layout specified by the layout data 121 acquired in step S01 (S102). For example, the generation unit 111 interchanges positions of two arbitrarily selected facilities.

The generation unit 111 calculates an evaluation value of the layout data generated in step S102 (S103).

The generation unit 111 determines whether or not the evaluation value obtained in step S103 has reached a target value (S104).

If the evaluation value does not reach the target value (NO in S104), the generation unit 111 returns to the processing of step S102 and repeats the processing of steps S102 to S104.

When the evaluation value reaches the target value (YES in S104), the generation unit 111 determines the layout data generated in step S102 as new layout data (S105). When the new layout data is determined, the generation unit 111 ends the processing of designing the new layout in step S10 in FIG. 9A.

Returning to FIG. 9A, the generation unit 111 outputs layout data of the new layout designed in step S10 (S11).

### <<1-3. Example of layout design>>

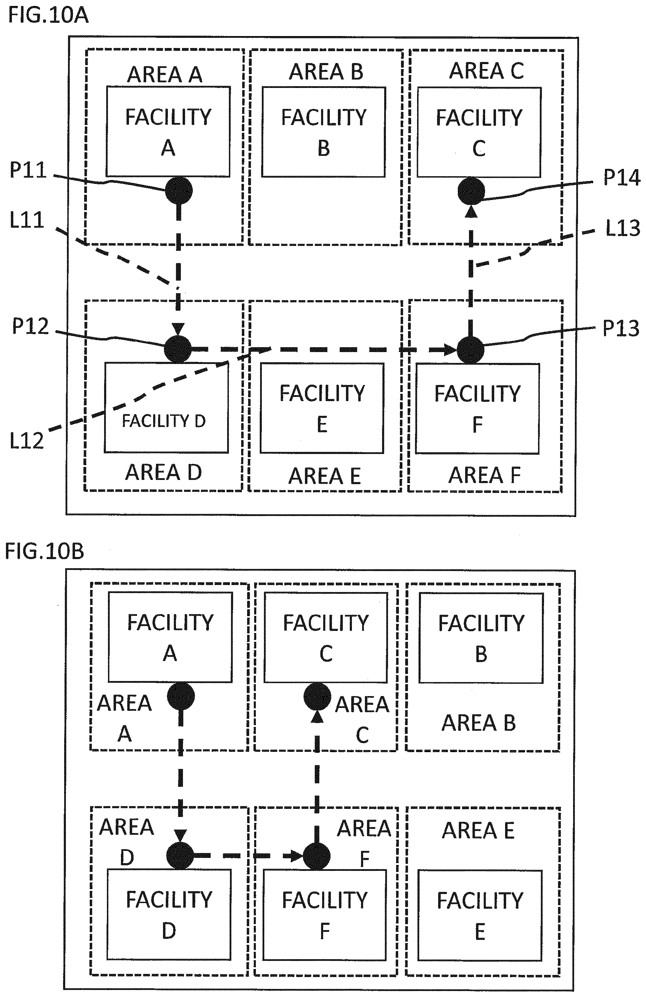

An example of a layout designed by the layout design device 1 will be described with reference to examples illustrated in FIGS. 10A to 10D.

First, a case where a new layout is designed using, for example, the above-described evaluation function 1 that shortens the total moving distance will be described by using a layout illustrated in a schematic diagram of FIG. 10A. In a space of the layout of the example illustrated in FIG. 10A, there are facilities A to F, and work ranges of the respective facilities are areas A to F. It is assumed that a target stays in the area A (P11), then moves to the area D and stays (L11, P12), subsequently moves to the area F and stays (L12, P13), and finally moves to the area C and stays (L13, P14) as indicated by flow lines in FIG. 10A. At this time, when determination is made only on the basis of the flow line data and the stay data, it seems that the facility A, the facility B, the facility F, and the facility C are used in this order to work and the facility B and the facility E are not used.

Therefore, in a case where the new layout is designed by using only the flow line data and the stay data illustrated in FIG. 10A, for example, there is a possibility that a layout as illustrated in FIG. 10B is generated. Specifically, in the new layout illustrated in FIG. 110B, positions of the facility F to be used next to the facility D and the facility E that is not used according to the flow line are interchanged, and the positions of the facility D and the facility F are brought close to each other. In addition, in the new layout, positions of the facility C to be used next to the facility F and the facility B that is not used according to the flow line are interchanged, and the positions of the facility F and the facility C are brought close to each other. In this case, when the layout illustrated in FIG. 10A is compared with the layout illustrated in FIG. 10B, the total distance of the flow lines is shortened, so that the layout seems to be improved.

However, although not illustrated in the layout including the flow line data and the stay data illustrated in FIG. 10A, for example, when working in the facility D, a worker may extend his/her hand from the area D to use the facility E, or when working in the facility C, a worker may refer to information displayed on a display installed in the facility B from the area C. Such information cannot be grasped only from the flow lines (L11 to L13) and the stay points (P11 to P14) illustrated in FIG. 10A. Therefore, when the layout as illustrated in FIG. 10B is generated by using only the flow lines, work efficiency may be rather lowered.

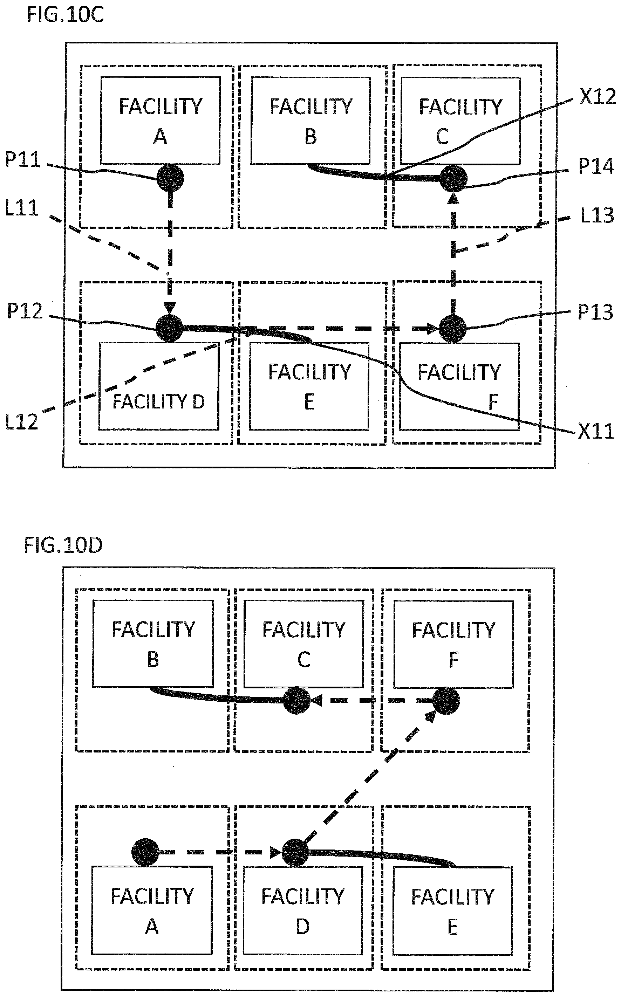

On the other hand, for example, as illustrated in FIG. 10C, the layout design device 1 acquires an auxiliary line X11 that is auxiliary information indicating that the facility E is used during work in the facility D, and acquires an auxiliary line X12 that is auxiliary information indicating that the facility B is used during work in the facility C. By using the auxiliary information together with the flow line data and the stay data in this manner, the layout design device 1 can generate layout data that improves work efficiency.

Specifically, the layout design device 1 associates the facility D with the facility E and associates the facility C with the facility B on the basis of the auxiliary lines that are the auxiliary information. Thus, the layout design device 1 designs, for example, a layout as illustrated in FIG. 10D. The layout illustrated in FIG. 10D is a configuration in which a position of each facility is slid in a left rotation direction as compared with the existing layout illustrated in FIG. 10A.

### <<1-4. Effects etc.>>

As described above, the layout design device 1 can design a layout that improves work efficiency by designing the layout using the auxiliary information.

### <Second embodiment>

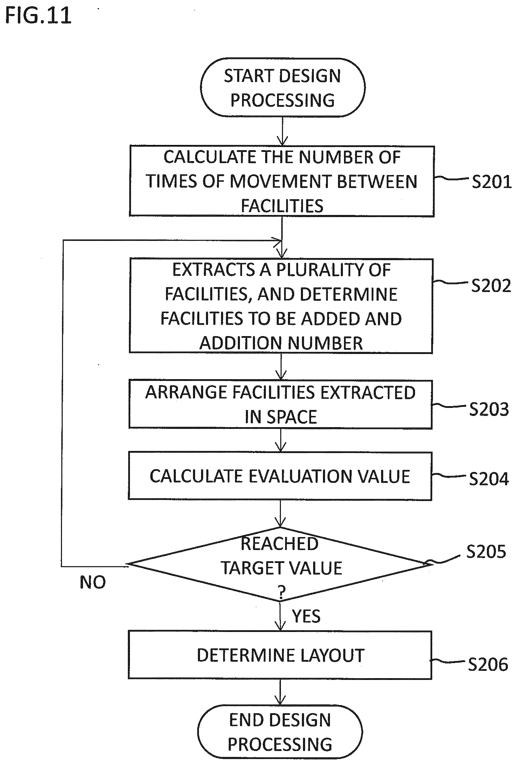

A layout design device according to a second embodiment will be described below with reference to FIGS. 11 to 13C. The layout design device 1 according to the first embodiment described above designs a new layout by interchanging the positions of the facilities in the existing layout. On the other hand, the layout design device according to the second embodiment designs a new layout by extracting a necessary facility, removing an unnecessary facility, or adding a necessary facility, and then arranging each facility in a space.

### <<2-1. Configuration>>

A configuration of the layout design device according to the second embodiment is the same as that of the layout design device 1 described above in the second embodiment. Therefore, the configuration of the layout design device according to the second embodiment will not be described with reference to FIGS. 1A to 7.

### <<2-2. Operation>>

In addition, entire processing in the layout design device 1 according to the second embodiment is executed as described above with reference to FIG. 9A. On the other hand, design processing is different from the design processing executed using FIG. 9B. The design processing in the layout design device 1 according to the second embodiment will be described below with reference to a flowchart of FIG. 11.

First, the generation unit 111 calculates the number of times of movement between facilities (S201).

The generation unit 111 arbitrarily extracts a plurality of facilities as addition facilities from a layout specified by the existing layout data acquired in step S01, and determines the facilities to be added and the addition number (S202). For example, the generation unit 111 determines an "addition facility" to be added and determines the addition number. The addition number may be set as "one is added" or "a random number is added". The generation unit 111 determines the addition facility and the addition number within a range of a constraint condition. At this time, the generation unit 111 determines the addition facility and determines the addition number such that the sum of the number of "existing facilities", which are existing facilities, and the number of "addition facilities" becomes a predetermined number.

The generation unit 111 randomly arranges the facilities of the number extracted in step S202 and determined to be installed in the space (S203). At this time, in a case where a plurality of facilities overlap each other, in other words, in a case where there is an overlapping portion in positions of the facilities, the generation unit 111 moves any one or more of the positions of the facilities to prevent occurrence of the overlapping. In addition, in a case of being out of the range of the constraint condition, the generation unit 111 changes the arrangement so as to be within the range of the constraint condition.

The generation unit 111 calculates an evaluation value of the layout data generated in step S203 (S204).

The generation unit 111 determines whether or not the evaluation value obtained in step S204 has achieved a target value (S205).

If the evaluation value does not reach the target value (NO in S205), the generation unit 111 returns to the processing of step S202 and repeats the processing of steps S202 to S205.

When the evaluation value reaches the target value (YES in S205), the generation unit 111 determines the layout data generated in step S203 as new layout data (S206).

### <<2-3. Example of layout design>>

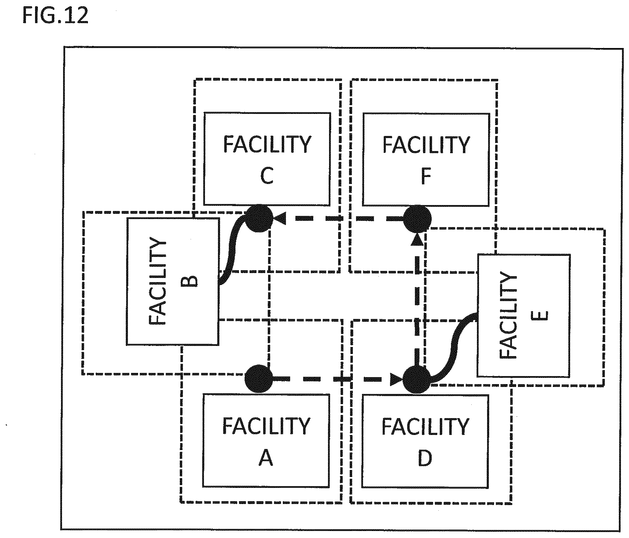

An example of a layout designed by the layout design device 1 will be described with reference to examples illustrated in FIGS. 12 to 13D.

### (First layout)

A case where a new layout is designed using, for example, the above-described evaluation function 1 that shortens the total moving distance will be described by using a layout illustrated in a schematic diagram of FIG. 12. The layout illustrated in FIG. 12 is an example of a layout designed on the basis of the auxiliary line which is the auxiliary information as described above with reference to FIG. 10C. In a case where the facility D and the facility E are associated with each other and the facility C and the facility B are associated with each other, the layout design device 1 may design the layout as illustrated in FIG. 12 by randomly arranging positions of the facilities. In the new layout illustrated in FIG. 12 generated in this manner, necessary facilities are close to each other, and a distance of a flow line is short as a whole, as compared with the existing layout illustrated in FIG. 10A. Therefore, the layout design device 1 can generate a layout with improved work efficiency as a whole.

Note that, as illustrated in FIG. 12, an area set for the facility may be set so as to overlap with an area set for the other facility. Specifically, as described above, the area B set for the facility B has a portion overlapping with the area A set for the facility A or the area C set for the facility C. In addition, an area E set for the facility E has a portion overlapping with the area D set for the facility D or the area F set for the facility F. By providing the overlapping portion within a range in which work is not hindered in this manner, it is possible to shorten a distance between the facilities. As a result, it may be possible to create a layout with improved work efficiency.

In a case where an overlapping portion of areas is set as illustrated in FIG. 12 and a stay point exists in the existing layout, the stay can be associated with both facilities. In addition, in a case where the stay point existing in the overlapping portion is associated with a plurality of facilities, the stay point may be associated with only one of the facilities by using auxiliary information such as an auxiliary line.

### (Second layout)

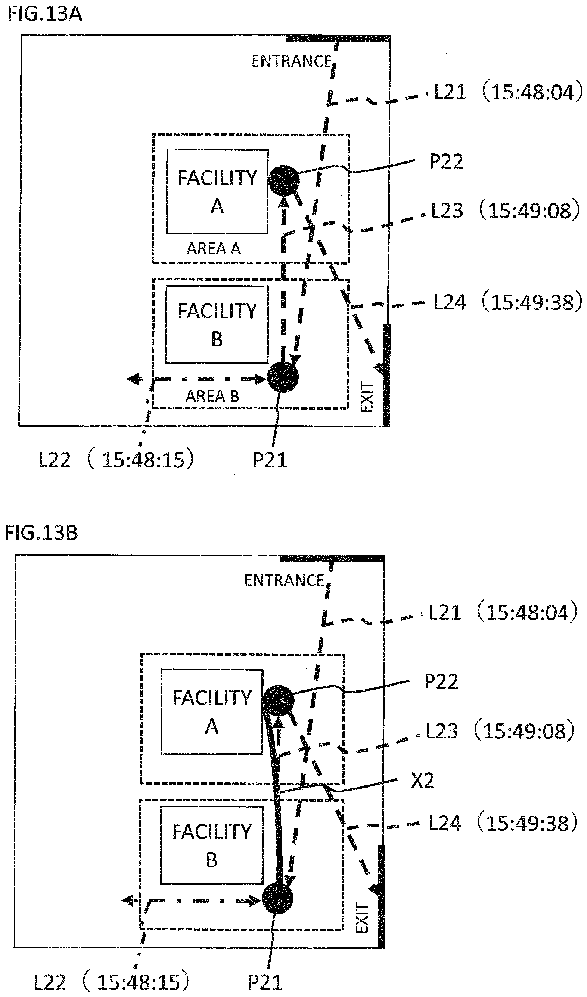

A case where a new layout is designed using, for example, the above-described evaluation function 2 that increases the operation rate, that is, decreases a non-operation rate will be described by using a layout illustrated in FIG. 13A. In an example of the layout illustrated in FIG. 13A, the facility A and the facility B exist in a space, and work ranges set for the respective facilities are the area A and the area B. In FIGS. 13A to 13C, a broken line indicates movement of a cart and a worker, and an alternate long and short dash line indicates movement of only the worker. In the example illustrated in FIG. 13A, first, the worker carrying the cart enters from an entrance at "15 : 48 : 04" (L21). While the cart is left in the area B where the facility B exists (P21), only the worker goes back and forth to take necessary things without carrying the cart at "15 : 48 : 15" (L22). The worker again carries the cart at "15 : 49 : 08" to move to the area A where the facility A exists (L23), and the cart stays together with the worker in the area A for work (P22). Thereafter, the worker leaves from an exit with the cart at "15 : 49 : 38" (L24). Although only a flow line of the one worker is illustrated in FIG. 13A, actually, it is assumed that a plurality of workers work in the space at the same time and a plurality of flow lines and stays exist.

In the example illustrated in FIG. 13A, the worker who has entered the space from the entrance first moves to the area B with the cart. However, this is not intended for the worker to work in the area B, but it is assumed that the cart cannot be placed because the facility A is used, the cart is temporarily placed in the area B, and the worker goes to take the necessary things for the work in the area A. Originally, it is often difficult to specify these specific situations only from flow line data and stay data. Therefore, a user can input such information as the auxiliary information to be useful for designing a new layout.

FIG. 13B illustrates an example in which an auxiliary line X2 that associates the facility A with the stay point P21 in the area B is added. By adding such an auxiliary line X2, the layout design device 1 can specify that the stay in the area B is "temporary placement" of the cart for the purpose of use in the facility A. Note that the stay being the "temporary placement" of the cart is specified by a distance between the stay point P21 and the area A, specifically, a distance of the auxiliary line X2. For example, when the distance of the auxiliary line X2 is a predetermined distance or more, the "temporary placement" is set, and when the distance of the auxiliary line X2 is within the predetermined distance, the facility is used. Thus, the auxiliary line in FIG. 13B is distinguished as not indicating that "the facility A is used during work in the area B" but indicating that "originally it is desired to be arranged in the area A, but due to congestion, it is arranged in the area B".

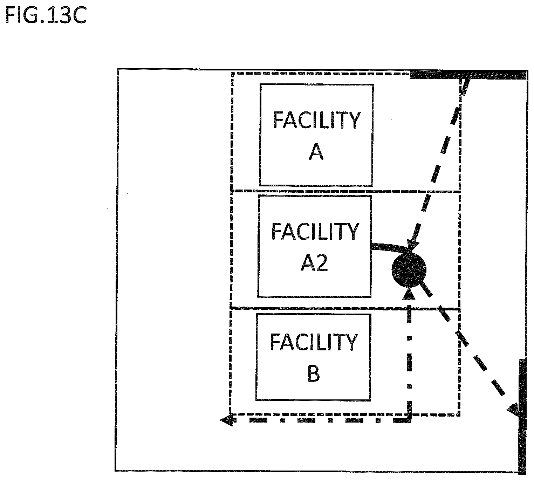

By specifying that stay occurs in the area A where work is performed using the facility A, the layout design device 1 can add one facility A and create a layout having two facilities A, for example, as illustrated in FIG. 13C. Note that, in FIG. 13C, the facility A and the area A in FIG. 13A are added with the added facility A as a "facility A2" and a work range set for the facility A2 as the area A2. Accordingly, the worker who enters from the entrance leaves the cart in the area A2 where the facility A2 exists without temporarily placing it in the area B. He/she takes necessary things, returns to the area A2, works using the facility A2, and then leaves from the exit. In this way, unnecessary stay can be prevented, and an efficient layout can be created.

### <<2-4. Effects etc.>>

As described above, the layout design device 1 can design a layout that improves work efficiency by designing the layout using the auxiliary information.

As described above, the above preferred embodiments have been described as examples of the technique disclosed in the present application. However, the technique in the present disclosure is not limited to this, and can also be applied to embodiments in which changes, substitutions, additions, omissions, etc. are made as appropriate.

### <Other embodiments>

### (1) Motion information

In the above-described embodiments, the layout design device 1 has been described by using the examples in which the auxiliary line input by the user via the input unit 13 as the auxiliary information, but the auxiliary information may be other auxiliary information. For example, in a case where the target is a person such as a worker, information obtained by detecting a motion of the person can be used as the auxiliary information.

### (1-1. Line of sight detection)

As an example of the motion detection information, there is considered information of line of sight recognition using a camera capable of detecting a line of sight of a person such as a worker. When it is specified by this information of line of sight recognition that the line of sight of the person is directed to a facility in an area different from a stay point and information provided by the facility in this different area is used, the auxiliary information assignment unit 115 associates the facility to which the line of sight is directed with this stay point. For example, in a case where the line of sight is directed to the facility in the area different from the stay point for a predetermined time or more (for example, 15 seconds or more), the auxiliary information assignment unit 115 associates the stay point with this facility.

### (1-2. Wearable sensor)

As another example of the motion detection information, detection information of a wearable sensor worn by a person such as a worker can be considered. When it is specified that the person uses a facility in an area different from a stay point from information such as a type of the motion and a motion range detected by this wearable sensor, the auxiliary information assignment unit 115 associates the used facility with this stay point.

### (1-3. Infrared sensor)

As another example of the motion detection information, for example, detection information of an infrared sensor provided in each area or the like in the space can be considered. For example, when the infrared sensor detects that a person extends his/her hand to an area different from a stay point, or the like, the auxiliary information assignment unit 115 specifies that a facility in the area different from the stay point is used, and associates the used facility with this stay point.

### (1-4. Skeleton recognition)

As another example of the motion information, for example, information of skeleton recognition of a person such as a worker using a camera can be considered. When a motion of this person is detected by this information of the skeleton recognition, and it is specified that the person uses a facility in an area different from a stay point, the auxiliary information assignment unit 115 associates the used facility with this stay point.

### (2) Table data

As another method of generating the auxiliary information, a method of using table data associating a facility with a range of a position where the facility can be used even outside an area of this facility can be considered. In this table data, each facility is associated in advance with a range that is out of the range of the area set for this facility and is set as a position where this facility can be used. Therefore, for example, in a case where a stay point exists in a range included in this table from stay data, the auxiliary information assignment unit 115 sets this stay point as the auxiliary information. In addition, the auxiliary information assignment unit 115 associates this stay point with the facility associated with the table data.

### (3) Generation of layout data

In step S102 of FIG. 9A, the method of "generating layout data by interchanging positions of a plurality of arbitrarily selected facilities" has been described. As another example of generating layout data, various methods such as "a method of generating layout data by interchanging positions of facilities arranged on a straight line in a vertical direction, a horizontal direction, or the like" and "a method of generating layout data by randomly arranging all facilities and shifting overlaps in a case where there is an overlap" can be considered.

### <<Outline of embodiments>>

(1) A layout design device of the present disclosure may be a layout design device that designs a new layout obtained by changing an existing layout related to arrangement of a facility in a certain space, the layout design device including: a generation unit that generates a new layout according to stay data related to a stay specified from flow line data representing a motion of a target in a case of the existing layout in the space; and an output processing unit that outputs the new layout generated by the generation unit, in which the generation unit generates the stay data by extracting a stay portion where the target stays from the flow line data, and generates the new layout by using auxiliary information that associates the facility arranged in the space with the stay portion and the stay data.
   As a result, the arrangement of the facility in the space can be changed, and an efficient layout can be provided.
(2) In the layout design device of (1), the generation unit may further generate, from the flow line data, movement frequency data from the stay portion where the target stays to a next stay portion where the target stays, and generate the new layout by using the auxiliary information that associates the facility arranged in the space with the stay portion, the stay data, and the movement frequency data.
   As a result, an efficient layout can be provided by using the information regarding the movement between the stay portions.
(3) In the layout design device of (1), the auxiliary information may be information for associating the stay portion with a selected facility other than a facility adjacent to the stay portion, and the generation unit may generate the new layout by associating the stay portion with the facility adjacent to the stay portion, and generate the new layout by associating the stay portion with the selected facility to be associated in the auxiliary information.
   As a result, an efficient layout can be provided by using the auxiliary information when associating the facility with the stay point.
(4) In the layout design device of (1), the generation unit may generate a new layout by using a predetermined evaluation function.
   As a result, an efficient layout can be provided using the evaluation function.
(5) In the layout design device of (4), the evaluation function used by the generation unit may design a new layout in which a sum of flow lines of the target is smaller than the existing layout.
   As a result, it is possible to provide an efficient layout with a short moving distance.
(6) In the layout design device of (4), the evaluation function used by the generation unit may design a layout in which an operation rate of the facility is larger than the existing layout.
   As a result, it is possible to provide an efficient layout with an improved operation rate of the facility.
(7) In the layout design device of (4), the evaluation function used by the generation unit may design a layout in which a plurality of targets simultaneously stay within a predetermined range in the space for a predetermined time or more and a stay time is shorter than the existing layout.
   As a result, it is possible to provide an efficient layout that mitigates congestion in the space.
(8) In the layout design device of (4), the generation unit may design the new layout according to a constraint condition for designing a layout.
   As a result, the new layout can be generated within a feasible range, or an inefficient new layout can be prevented from being generated.
(9) In the layout design device of (8), the constraint condition may be information regarding allowance of the addition number of facilities, and the generation unit may design the new layout by acquiring the information regarding the allowance of the addition number of facilities arranged in the space and adding the facility within a range designated by the constraint condition.
   As a result, the layout can be designed within a range of realistic facility addition.
(10) In the layout design device of (1), the auxiliary information may be information in which a facility selected by a user and the stay portion are associated with each other.
   As a result, it is possible to design an efficient layout in consideration of the auxiliary information designated by the user.
(11) In the layout design device of (1), the auxiliary information may be information for specifying a motion of a worker who is the target, and the generation unit may associate a facility associated with the motion included in the auxiliary information with the stay portion where the target exists.
   As a result, it is possible to design an efficient layout in consideration of the auxiliary information specified by the user's behavior.
(12) In the layout design device of (8), the generation unit may use the auxiliary information for at least either the evaluation function or the constraint condition.
(13) A layout design method of the present disclosure can be a layout design method for designing a new layout obtained by changing an existing layout related to arrangement of a facility in a certain space, the layout design method including the steps of: generating stay data by extracting a stay portion where a target stays from flow line data representing a motion of a target in a case of the existing layout in the space and; generating a new layout by using auxiliary information that associates the facility arranged in the space with the stay portion and the stay data; and outputting the generated new layout.
   As a result, it is possible to provide an efficient layout in which a moving distance of a worker or the like is shortened.
(14) A program of the present disclosure causes a computer to implement the method of (13).

As a result, it is possible to provide an efficient layout in which a moving distance of a worker or the like is shortened.

The layout design device, the layout design method, and the program described in all claims of the present disclosure are implemented in cooperation with hardware resources, for example, a processor and a memory, and a program, and the like.

### INDUSTRIAL APPLICABILITY

The layout design device, the layout design method, and the program of the present disclosure are useful in a case of changing a layout for improving work efficiency in various places such as a factory and a store.

### EXPLANATIONS OF LETTERS OR NUMERALS

- 1: Layout design device
- 11: Control unit
- 111: Generation unit
- 112: Output processing unit
- 12: Storage unit
- 13: Input unit
- 14: Output unit
- 121: Layout data
- 122: Constraint condition data
- 123: Flow line data
- 124: Stay data
- 125: Movement frequency data
- 126: Stay facility data
- 127: Related data

## Claims

1. A layout design device (1) that is configured to design a new layout obtained by changing an existing layout related to arrangement of a facility in a certain space (200), the layout design device (1) comprising:
a generation unit (111) that is configured to generate a new layout according to stay data (124) related to a stay specified from flow line data (123) representing a motion of a target (201) in a case of the existing layout in the space (200);
an output processing unit (112) that is configured to output the new layout generated by the generation unit (111), and
a display (14),
wherein the generation unit (111) is configured to
generate the stay data (124) by extracting a stay portion where the target stays from the flow line data (123), and to
generate the new layout by using auxiliary information that associates the facility arranged in the space (200) with the stay portion and the stay data (124), and
the output processing unit (112) is configured to cause the display (14) to display the new layout.

2. The layout design device (1) according to claim 1, wherein
the generation unit (111) is further configured to generate, from the flow line data (123), movement frequency data (125) from the stay portion where the target (201) stays to a next stay portion where the target (201) stays, and
to generate the new layout by using the auxiliary information that associates the facility arranged in the space (200) with the stay portion, the stay data (124), and the movement frequency data (125).

3. The layout design device (1) according to claim 1 or 2, wherein
the auxiliary information is information for associating the stay portion with a selected facility other than a facility adjacent to the stay portion, and
the generation unit (111) is configured to
generate the new layout by associating the stay portion with the facility adjacent to the stay portion, and to
generate the new layout by associating the stay portion with the selected facility to be associated in the auxiliary information.

4. The layout design device (1) according to any one of claims 1 to 3, wherein
the generation unit (111) is configured to generate a new layout using a predetermined evaluation function.

5. The layout design device (1) according to claim 4, wherein
the evaluation function used by the generation unit (111) is configured to design a new layout in which a sum of flow lines of the target is smaller than the existing layout.

6. The layout design device (1) according to claim 4, wherein
the evaluation function used by the generation unit (111) is configured to design a layout in which an operation rate of the facility is larger than the existing layout.

7. The layout design device (1) according to claim 4, wherein
the evaluation function used by the generation unit (111) is configured to design a layout in which a plurality of targets simultaneously stay within a predetermined range in the space (200) for a predetermined time or more and a stay time is shorter than the existing layout.

8. The layout design device (1) according to any one of claims 4 to 7, wherein
the generation unit (111) is configured to design the new layout according to a constraint condition for designing a layout.

9. The layout design device (1) according to claim 8, wherein
the constraint condition is information regarding allowance of an addition number of facilities, and
the generation unit (111) is configured to design the new layout by acquiring the information regarding the allowance of the addition number of facilities arranged in the space (200) and adding the facility within a range designated by the constraint condition.

10. The layout design device (1) according to any one of claims 1 to 9, wherein
the auxiliary information is information in which a facility selected by a user and the stay portion are associated with each other.

11. The layout design device (1) according to any one of claims 1 to 9, wherein
the auxiliary information is information for specifying a motion of a worker who is the target, and
the generation unit (111) associates a facility associated with the motion included in the auxiliary information with the stay portion where the target exists.

12. The layout design device (1) according to claim 8, wherein
the generation unit (111) is configured to use the auxiliary information for at least either the evaluation function or the constraint condition.

13. The layout design device (1) according to claim 1, wherein
the output processing unit (112) is configured
to draw the layout,
to draw flow lines on the layout by the flow line data (123) and the stay data (124), and
to display the flow lines on the display (14)

14. A layout design method for designing a new layout obtained by changing an existing layout related to arrangement of a facility in a certain space (200), the layout design method comprising the steps of:
generating (S105) stay data (124) by extracting a stay portion where a target stays from flow line data (123) representing a motion of the target in a case of the existing layout in the space (200);
generating (S105, S206) a new layout by using auxiliary information that associates the facility arranged in the space (200) with the stay portion and the stay data (124); and
outputting (S11) the generated new layout.

15. A program (P) for causing a computer to implement the method of claim 14.

## Patentansprüche

1. Layoutgestaltungsvorrichtung (1), die ausgestaltet ist, sie ein neues Layout zu gestalten, das durch Ändern eines bestehenden Layouts erhalten wird, das sich auf die Anordnung einer Einrichtung in einem bestimmten Raum (200) bezieht, wobei die Layoutgestaltungsvorrichtung (1) umfasst:
eine Erzeugungseinheit (111), die ausgestaltet ist, ein neues Layout gemäß Aufenthaltsdaten (124) zu erzeugen, die sich auf einen Aufenthalt beziehen, der aus Flussliniendaten (123) spezifiziert ist, die eine Bewegung eines Ziels (201) in einem Fall des bestehenden Layouts in dem Raum (200) darstellen;
eine Ausgabeverarbeitungseinheit (112), die ausgestaltet ist, das von der Erzeugungseinheit (111) erzeugte neue Layouts auszugeben, und
eine Anzeige (14),
wobei die Erzeugungseinheit (111) ausgestaltet ist
die Aufenthaltsdaten (124) zu erzeugen, indem ein Aufenthaltsbereich, in dem das Ziel verweilt, aus den Flussliniendaten (123) extrahiert wird, und
das neue Layout unter Verwendung von Zusatzinformation zu erzeugen, die die in dem Raum (200) angeordnete Einrichtung mit dem Aufenthaltsabschnitt und den Aufenthaltsdaten (124) verknüpft, und
die Ausgabeverarbeitungseinheit (112) ausgestaltet ist, die Anzeige (14) zu veranlassen, das neue Layout anzuzeigen.

2. Layoutgestaltungsvorrichtung (1) nach Anspruch 1, wobei
die Erzeugungseinheit (111) ferner ausgestaltet ist, aus den Flussliniendaten (123) Bewegungsfrequenzdaten (125) von dem Aufenthaltsabschnitt, in dem sich das Ziel (201) aufhält, zu einem nächsten Aufenthaltsabschnitt, in dem sich das Ziel (201) aufhält, zu erzeugen, und
das neue Layout unter Verwendung der Zusatzinformation zu erzeugen, die die in dem Raum (200) angeordnete Einrichtung mit dem Aufenthaltsabschnitt, den Aufenthaltsdaten (124) und den Bewegungsfrequenzdaten (125) verknüpft.

3. Layoutgestaltungsvorrichtung (1) nach Anspruch 1 oder 2, wobei
die Zusatzinformation Information ist, um den Aufenthaltsabschnitt mit einer ausgewählten Einrichtung zu verknüpfen, die nicht eine an den Aufenthaltsabschnitt angrenzende Einrichtung ist, und
die Erzeugungseinheit (111) ausgestaltet ist,
das neue Layout zu erzeugen, indem der Aufenthaltsabschnitt mit der an den Aufenthaltsabschnitt angrenzenden Einrichtung verknüpft wird, und
das neue Layout zu erzeugen, indem der Aufenthaltsabschnitt mit der ausgewählten Einrichtung verknüpft wird, die in der Zusatzinformation zu verknüpfen ist.

4. Layoutgestaltungsvorrichtung (1) nach einem der Ansprüche 1 bis 3, wobei
die Erzeugungseinheit (111) ausgestaltet ist, ein neues Layout unter Verwendung einer vorgegebenen Bewertungsfunktion zu erzeugen.

5. Layoutgestaltungsvorrichtung (1) nach Anspruch 4, wobei
die von der Erzeugungseinheit (111) verwendete Bewertungsfunktion ausgestaltet ist, ein neues Layout zu gestalten, in dem eine Summe von Flusslinien des Ziels kleiner ist als beim bestehenden Layout.

6. Layoutgestaltungsvorrichtung (1) nach Anspruch 4, wobei
die von der Erzeugungseinheit (111) verwendete Bewertungsfunktion ausgestaltet ist, ein Layout zu gestalten, bei dem eine Betriebsrate der Anlage größer ist als beim bestehenden Layout.

7. Layoutgestaltungsvorrichtung (1) nach Anspruch 4, wobei
die von der Erzeugungseinheit (111) verwendete Bewertungsfunktion ausgestaltet ist, ein Layout zu gestalten, in dem sich mehrere Ziele gleichzeitig innerhalb eines vorbestimmten Bereichs in dem Raum (200) für eine vorbestimmte Zeit oder länger aufhalten und eine Aufenthaltszeit kürzer ist als beim bestehenden Layout.

8. Layoutgestaltungsvorrichtung (1) nach einem der Ansprüche 4 bis 7, wobei
die Erzeugungseinheit (111) so konfiguriert ist, dass sie das neue Layout gemäß einer Randbedingung für den Entwurf eines Layouts entwirft.

9. Layoutgestaltungsvorrichtung (1) nach Anspruch 8, wobei
die Randbedingung eine Information bezüglich der Zulassung einer zusätzlichen Anzahl von Einrichtungen ist, und
die Erzeugungseinheit (111) ausgestaltet ist, das neue Layout zu gestalten, indem die Informationen bezüglich der Zulässigkeit der zusätzlichen Anzahl von Einrichtungen, die in dem Raum (200) angeordnet sind, erfasst wird und die Einrichtung innerhalb eines durch die Randbedingung bezeichneten Bereichs hinzugefügt wird.

10. Layoutgestaltungsvorrichtung (1) nach einem der Ansprüche 1 bis 9, wobei
die Zusatzinformation Information ist, in der eine von einem Benutzer ausgewählte Einrichtung und der Aufenthaltsbereich einander zugeordnet sind.

11. Layoutgestaltungsvorrichtung (1) nach einem der Ansprüche 1 bis 9, wobei
die Zusatzinformation eine Information zur Spezifizierung einer Bewegung eines Arbeiters ist, der das Ziel ist, und
die Erzeugungseinheit (111) eine Einrichtung, die mit der in der Zusatzinformation enthaltenen Bewegung verbunden ist, mit dem Aufenthaltsabschnitt verknüpft, in dem das Ziel existiert.

12. Layoutgestaltungsvorrichtung (1) nach Anspruch 8, wobei
die Erzeugungseinheit (111) ausgestaltet ist, die Zusatzinformation für mindestens entweder die Bewertungsfunktion oder die Randbedingung zu verwenden.

13. Layoutgestaltungsvorrichtung (1) nach Anspruch 1, wobei
die Ausgabeverarbeitungseinheit (112) ausgestaltet ist
das Layout zu zeichnen,
Flusslinien auf dem Layout durch die Flussliniendaten (123) und die Aufenthaltsdaten (124) zu zeichnen, und
die Flusslinien auf dem Display (14) anzuzeigen.

14. Layoutgestaltungsverfahren zum Gestalten eines neuen Layouts, das durch Ändern eines bestehenden Layouts erhalten wird, das sich auf die Anordnung einer Einrichtung in einem bestimmten Raum (200) bezieht, wobei das Layoutgestaltungsverfahren die folgenden Schritte umfasst:
Erzeugen (S105) von Aufenthaltsdaten (124) durch Extrahieren eines Aufenthaltsabschnitts, in dem ein Ziel verweilt, aus Flussliniendaten (123), die eine Bewegung des Ziels in einem Fall des bestehenden Layouts in dem Raum (200) darstellen;
Erzeugen (S105, S206) eines neuen Layouts unter Verwendung von Zusatzinformation, die die in dem Raum (200) angeordnete Einrichtung mit dem Aufenthaltsabschnitt und den Aufenthaltsdaten (124) verknüpft; und
Ausgeben (S11) des erzeugten neuen Layouts.

15. Programm (P), das einen Computer veranlasst, das Verfahren nach Anspruch 14 durchzuführen.

## Revendications

1. Dispositif de conception d'agencement (1) configuré pour concevoir un nouvel agencement obtenu en modifiant un agencement existant lié au agencement d'une installation dans un certain espace (200), le dispositif de conception d'agencement (1) comprenant :
une unité de génération (111) configurée pour générer un nouvel agencement en fonction de données de séjour (124) relatives à un séjour spécifié à partir de données de lignes de flux (123) représentant un mouvement d'une cible (201) dans le cas du agencement existant dans l'espace (200) ;
une unité de traitement de sortie (112) configurée pour sortir le nouvel agencement généré par l'unité de génération (111), et
un écran (14),
l'unité de génération (111) est configurée pour
générer les données d'arrêt (124) en extrayant une partie d'arrêt où la cible reste à partir des données de ligne d'écoulement (123), et à
générer le nouvel agencement en utilisant des informations auxiliaires qui associent l'installation disposée dans l'espace (200) à la partie de séjour et aux données de séjour (124), et
l'unité de traitement de sortie (112) est configurée pour faire en sorte que l'écran (14) affiche le nouvel agencement.

2. Dispositif de conception d'agencement (1) selon la revendication 1, dans lequel
l'unité de génération (111) est en outre configurée pour générer, à partir des données de ligne de flux (123), des données de fréquence de mouvement (125) depuis la partie de séjour où la cible (201) reste jusqu'à une partie de séjour suivante où la cible (201) reste, et
générer le nouvel agencement en utilisant les informations auxiliaires qui associent l'installation disposée dans l'espace (200) à la partie de séjour, les données de séjour (124) et les données de fréquence de mouvement (125).

3. Dispositif de conception (1) selon la revendication 1 ou 2, dans lequel
les informations auxiliaires sont des informations permettant d'associer la partie de séjour à une installation sélectionnée autre qu'une installation adjacente à la partie de séjour, et
l'unité de génération (111) est configurée pour
générer le nouvel agencement en associant la partie de séjour à l'installation adjacente à la partie de séjour, et pour
générer le nouvel agencement en associant la partie de séjour à l'installation sélectionnée à associer dans les informations auxiliaires.

4. Dispositif de conception d'agencement (1) selon l'une des revendications 1 à 3, dans lequel
l'unité de génération (111) est configurée pour générer un nouvel agencement à l'aide d'une fonction d'évaluation prédéterminée.

5. Dispositif de conception d'agencement (1) selon la revendication 4, dans lequel
la fonction d'évaluation utilisée par l'unité de génération (111) est configurée pour concevoir un nouvel agencement dans lequel une somme de lignes de flux de la cible est inférieure au agencement existant.

6. Dispositif de conception d'agencement (1) selon la revendication 4, dans lequel
la fonction d'évaluation utilisée par l'unité de génération (111) est configurée pour concevoir un agencement dans laquelle un taux de fonctionnement de l'installation est supérieur au agencement existant.

7. Dispositif de conception d'agencement (1) selon la revendication 4, dans lequel
la fonction d'évaluation utilisée par l'unité de génération (111) est configurée pour concevoir un agencement dans lequel une pluralité de cibles restent simultanément dans une plage prédéterminée dans l'espace (200) pendant un temps prédéterminé ou plus et un temps de séjour est plus court que l'agencement existant.

8. Dispositif de conception d'agencement (1) selon l'une quelconque des revendications 4 à 7, dans lequel
l'unité de génération (111) est configurée pour concevoir le nouvel agencement selon une condition de contrainte pour la conception d'une disposition.

9. Dispositif de conception d'agencement (1) selon la revendication 8, dans lequel
la condition de contrainte est une information concernant l'autorisation d'un nombre supplémentaire d'installations, et
l'unité de génération (111) est configurée pour concevoir le nouvel agencement en acquérant les informations concernant l'autorisation du nombre supplémentaire d'installations disposées dans l'espace (200) et en ajoutant l'installation dans une plage désignée par la condition de contrainte.

10. Dispositif de conception d'agencement (1) selon l'une des revendications 1 à 9, dans lequel
l'information auxiliaire est une information dans laquelle une installation sélectionnée par un utilisateur et la portion de séjour sont associées l'une à l'autre.

11. Dispositif de conception d'agencement (1) selon l'une des revendications 1 à 9, dans lequel
l'information auxiliaire est une information permettant de spécifier un mouvement d'un travailleur qui est la cible, et
l'unité de génération (111) associe une installation associée au mouvement inclus dans l'information auxiliaire à la partie du séjour où se trouve la cible.

12. Dispositif de conception d'agencement (1) selon la revendication 8, dans lequel
l'unité de génération (111) est configurée pour utiliser les informations auxiliaires pour au moins la fonction d'évaluation ou la condition de contrainte.

13. Dispositif de conception d'agencement (1) selon la revendication 1, dans lequel
l'unité de traitement de sortie (112) est configurée
pour dessiner l'agencement,
pour dessiner des lignes de flux sur le tracé à l'aide des données de ligne de flux (123) et des données de séjour (124), et
afficher les lignes de flux sur l'écran (14)

14. Méthode de conception d'un nouvel agencement obtenu en modifiant un agencement existant lié à la disposition d'une installation dans un certain espace (200), la méthode de conception d'un agencement comprenant les étapes suivantes :
générer (S105) des données de séjour (124) en extrayant une partie de séjour où une cible reste à partir de données de lignes de flux (123) représentant un mouvement de la cible dans le cas de agencement existant dans l'espace (200) ;
générer (S105, S206) un nouvel agencement en utilisant des informations auxiliaires qui associent l'installation disposée dans l'espace (200) avec la partie de séjour et les données de séjour (124) ; et
sortir (S11) le nouvel agencement généré.

15. Programme (P) pour amener un ordinateur à mettre en œuvre la méthode de la revendication 14.
